# EUROPÄISCHE PATENTANMELDUNG

(11) **EP 4 624 523 A1**
(43) Veröffentlichungstag der Anmeldung: **01.10.2025**
(21) Anmeldenummer: 24166195.8
(22) Anmeldetag: 26.03.2024
(51) Int. Cl.: C08L 21/00, C08K 5/04

(54) **KAUTSCHUKMISCHUNGEN ENTHALTEND MINDESTENS EINE NICHTAROMATISCHE, POLARE SUBSTANZ**

(71) Anmelder: LANXESS Deutschland GmbH, 50569 Köln (DE)
(72) Erfinder: MÜLLER, Helmut, 97359 Schwarzach am Main (DE); MEIERS, Michaela, 52076 Aachen (DE); OPRISONI, Christian, 68723 Oftersheim (DE); ALBERS, Antonia, 51381 Leverkusen (DE)

(57) **Zusammenfassung**

Die Erfindung betrifft Kautschukmischungen, enthaltend je mindestens einen Kautschuk, mindestens einen hydroxylgruppenhaltigen oxidischen Füllstoff, mindestens ein Verstärkungsadditiv aus der Reihe der schwefelhaltigen organischen Silane, mindestens einen Vernetzer aus der Reihe Schwefel und Schwefelspender und mindestens eine nichtaromatische, polare Substanz mit 4-12 Kohlenstoffatomen, eine Mischung A enthaltend die mindestens eine Fettsäure und die mindestens eine nichtaromatische, polare Substanz mit 4-12 Kohlenstoffatomen, deren Herstellung und Verwendung, sowie die dadurch erhältlichen Vulkanisate nach dem Vulkanisationsverfahren, insbesondere in Form von Reifen, Teilen von Reifen oder technischen Gummiartikeln.

## Beschreibung

Die Erfindung betrifft Kautschukmischungen, enthaltend je mindestens einen Kautschuk, mindestens einen hydroxylgruppenhaltigen oxidischen Füllstoff, mindestens ein Verstärkungsadditiv aus der Reihe der schwefelhaltigen organischen Silane, mindestens einen Vernetzer aus der Reihe Schwefel und Schwefelspender, mindestens eine Fettsäure und mindestens eine nichtaromatische, polare Substanz mit 4-12 Kohlenstoffatomen, eine Mischung A enthaltend die mindestens eine Fettsäure und die mindestens eine nichtaromatische, polare Substanz mit 4-12 Kohlenstoffatomen, deren Herstellung und Verwendung, sowie die dadurch erhältlichen Vulkanisate nach dem Vulkanisationsverfahren, insbesondere in Form von Reifen, Teilen von Reifen oder technischen Gummiartikeln.

Um anwendungsrelevante Eigenschaften von Vulkanisaten wie Reifen erhalten aus Kautschukmischungen, wie z. B. die Nassrutschfestigkeit und den Rollwiderstand, zu optimieren, werden den Kautschukmischungen immer größere Mengen an Silika und Verstärkungsadditiven zugesetzt. Dies hat aber zur Folge, dass die Viskositäten der Vulkanisate stark ansteigen, was den Einsatz von effizienten Prozesshilfsmitteln erforderlich macht.

EP1253167A1 offenbart Kautschukmischungen enthaltend u.a. zumindest einen Dienkautschuk mit polaren Gruppen, Kieselsäure, Schwefel sowie eine nichtaromatische, polare Substanz. Das Beispiel E1 zeigt, dass sich bei Einsatz von 1,1,1-Trimethylolpropan (TMP) als nichtaromatische, polare Substanz in Kombination mit dem Dienkautschuk Acrylnitril-Styrol-Butadien Terpolymer neben einer reduzierten Viskosität auch eine verbesserte Nassrutschfestigkeit sowie ein gleichbleibender Rollwiderstand erreichen lassen, verglichen mit der analogen Mischung ohne TMP.

In WO2010136345A1 werden funktionalisierte Kautschuke zusammen mit einer TMP-Fettsäure-Mischung in Kautschukmischungen eingesetzt, um den Rollwiderstand und die Nassrutschfestigkeit zu verbessern.

TMP ist jedoch mittlerweile als reprotoxisch Kategorie 2 eingestuft worden. Aufgrund dieser Klassifizierung von TMP besteht ein großer Bedarf daran, toxikologisch weniger bedenkliche Ersatzstoffe für TMP zu finden, die eine vergleichbare Aktivität wie die der Trimethylolpropan-Fettsäure-Mischung in WO200136345A1 in Kautschukmischungen aufweisen.

Der vorliegenden Erfindung liegt demnach die Aufgabe zugrunde, toxikologisch weniger bedenkliche Kautschukmischungen bereitzustellen, verglichen mit Kautschukmischungen der WO2010136345A1, bei denen die anwendungsrelevanten Eigenschaften, bevorzugt die Nassrutschfestigkeit und der Rollwiderstand, bevorzugt gleich gut, und Mooney Viskosität, Anvulkanisationssicherheit und Füllstoffdispersion bevorzugt gleich gut, besonders bevorzugt besser, sind als bei den entsprechenden TMP-haltigen Kautschukmischungen bzw. Vulkanisaten. Noch weiter bevorzugt sind auch weitere anwendungstechnische Eigenschaften wie Bruchdehnung gleich gut, bevorzugt besser, als bei den entsprechenden TMP-haltigen Kautschukmischungen bzw. Vulkanisaten.

Überraschend wurde nun gefunden, dass bei Verwendung von mindestens einer nichtaromatischen, polaren Substanz mit 4-12 Kohlenstoffatomen, welche verschieden ist von TMP, in Kautschukmischungen enthaltend je mindestens einen Kautschuk, mindestens einen hydroxylgruppenhaltigen oxidischen Füllstoff, mindestens ein Verstärkungsadditiv aus der Reihe der schwefelhaltigen organischen Silane, mindestens einen Vernetzer aus der Reihe Schwefel und Schwefelspender und mindestens eine Fettsäure, Kautschukmischungen erhältlich sind, welche diese Aufgabe gegenüber den TMP-haltigen Äquivalenten lösen.

Die vorliegende Erfindung betrifft demnach Kautschukmischungen enthaltend
- mindestens einen Kautschuk,
- mindestens einen hydroxylgruppenhaltigen oxidischen Füllstoff,
- mindestens ein Verstärkungsadditiv aus der Reihe der schwefelhaltigen organischen Silane,
- mindestens einen Vernetzer aus der Reihe Schwefel und Schwefelspender, und
- mindestens eine Fettsäure
wobei weiter mindestens eine nichtaromatische, polare Substanz mit 4-12 Kohlenstoffatomen, bevorzugt mit 5-10 Kohlenstoffatomen, enthalten ist, die:
- Kohlenstoff-, Wasserstoff- und Sauerstoffatome enthält,
- einen Bereich von mindestens zwei chemisch verbundenen Kohlenstoffatomen aufweist,
- eine Hydroxylgruppe und zumindest eine weitere Sauerstoff enthaltende Gruppe ausgewählt aus Hydroxyl-, Ester-, Ether-, Acetal-, Ketal-, Aldehyd- und Carbonsäuregruppen enthält, wobei die Hydroxylgruppe und die weitere Sauerstoff enthaltende Gruppe nicht mehr als 3 Positionen entlang einer Molekülkette voneinander entfernt sind, und
- verschieden ist von 1,1,1-Trimethylolpropan (TMP).

Als Indikator für den Rollwiderstand wird der Verlustfaktor tan delta bei 60 °C, bevorzugt bei einer Messfrequenz von 10 Hz, herangezogen. Als Indikator für die Nassrutschfestigkeit gilt der tan delta bei 0 °C, bevorzugt bei einer Messfrequenz von 10 Hz.

Die Anvulkanisationssicherheit wird durch die Messung des Mooney Scorch-Verhaltens gemessen (Ts05, Ts10).

Als Indikator für die Füllstoffdispersion dient der Payne Effekt (delta G').

### Kautschuk

Die erfindungsgemäßen Kautschukmischungen enthalten mindestens einen Kautschuk. Dieser kann beispielsweise Naturkautschuk (NR) und/oder ein Synthesekautschuk sein.

### Bevorzugte polare und unpolare Synthesekautschuke sind

- ACM: - Polyacrylat Kautschuk
- AEM: - Ethylenacrylat Kautschuk
- BR: - Polybutadien
- ABR: - Butadien/Acrylsäure-C1-C4-alkylester-Copolymerisat
- CR: - Polychloropren
- IR: - Polyisopren
- SBR: - Styrol/Butadien-Copolymerisate mit Styrolgehalten von 1 - 60, vorzugsweise 20-50 Gew-%
- IIR: - Isobutylen/Isopren-Copolymerisate
- NBR: - Butadien/Acrylnitril-Copolymerisate mit Acrylnitrilgehalten von 5-60, vorzugsweise 10-50 Gew.-%
- HNBR: - teilhydrierter oder vollständig hydrierter NBR-Kautschuk
- EPM: - Ethylen/Propylen-Copolymerisate
- EPDM: - Ethylen/Propylen/Dien-Copolymerisate
- EVM: - Ethylen/Vinylacetat-Copolymerisate
- SIBR: - Styrol-Isopren-Butadien Kautschuk
- ENR: - Epoxidierter Naturkautschuk
- SNBR: - Arcylnitril-Styrol/Butadien Kautschuk
- HNBR: - Hydrierter Arcylnitril/Butadien Kautschuk
- XNBR: - Carboxylisierter Arcylnitril/Butadien Kautschuk
- HXNBR: - Hydrierter carboxylisierter Arcylnitril/Butadien Kautschuk

Besonders bevorzugte polare und unpolare Synthesekautschuke sind BR, SBR, SIBR, IR und ENR.

Der mindestens eine Synthesekautschuk kann unfunktionalisiert sein oder funktionalisiert sein.

Die erfindungsgemäßen Kautschukmischungen können mindestens einen funktionalisierten Synthesekautschuk enthalten. Es gelten dafür die oben genannten Ausführungen für die unfunktionalisierten Synthesekautschuke mit dem Unterschied, dass diese bei funktionalisierten Synthesekautschuken funktionalisiert vorliegen.

Unter funktionalisiertem Synthesekautschuk ist im Rahmen der vorliegenden Erfindung ein Synthesekautschuk zu verstehen, der an der Hauptkette und/oder an den Endgruppen durch eine oder mehrere funktionelle Gruppen, bevorzugt ausgewählt aus Carboxylgruppen, Mercaptan-Gruppen, Alkoxysilan-Gruppen, Siloxan-Gruppen, Hydroxy-Gruppen, Ethoxy-Gruppen, Epoxy-Gruppen, Amino-Gruppen Phthalocyanin-Gruppen, Silan-Sulfid-Gruppen und Metallatom- enthaltenden Gruppen, substituiert ist, besonders bevorzugt ausgewählt aus Mercaptan-Gruppen, Alkoxysilan-Gruppen und Hydroxy-Gruppen, ganz besonders bevorzugt ausgewählt aus Mercaptan-Gruppen und Alkoxysilan-Gruppen.

Unfunktionalisierte Synthesekautschuke im Rahmen der vorliegenden Erfindung enthalten die vorgenannten Substitutionen durch funktionelle Gruppen nicht.

Die erfindungsgemäßen Kautschukmischungen enthalten bevorzugt mindestens einen funktionalisierten Synthesekautschuk, besonders bevorzugt ausgewählt aus der Gruppe bestehend aus polaren und unpolaren funktionalisierten Synthesekautschuken.

Bevorzugt ist der mindestens eine funktionalisierte Synthesekautschuk ausgewählt aus der Gruppe bestehend aus funktionalisiertem SBR-, funktionalisiertem BR- und funktionalisiertem IR-Kautschuk, besonders bevorzugt aus funktionalisiertem SBR- und funktionalisiertem BR-Kautschuk.

Bevorzugt enthalten die erfindungsgemäßen Kautschukmischungen mindestens einen funktionalisierten SBR-Kautschuk und/oder einen funktionalisierten BR-Kautschuk, besonders bevorzugt mindestens einen funktionalisierten SBR- und mindestens einen funktionalisierten BR-Kautschuk.

In einer bevorzugten Ausführungsform ist der mindestens eine Kautschuk ausgewählt aus der Gruppe bestehend aus Naturkautschuk und Synthesekautschuken, ist bevorzugt mindestens ein funktionalisierter Synthesekautschuk, besonders bevorzugt mindestens ein funktionalisierter Synthesekautschuk ausgewählt aus der Gruppe bestehend aus funktionalisiertem SBR-, funktionalisiertem BR- und funktionalisiertem IR-Kautschuk, ganz besonders bevorzugt aus funktionalisiertem SBR- und funktionalisiertem BR-Kautschuk.

In der meist bevorzugten Ausführungsform ist der mindestens eine Kautschuk ein funktionalisierter SBR-Kautschuk und ein funktionalisierter BR-Kautschuk.

Bevorzugt ist der mindestens eine funktionalisierte SBR-Kautschuk an der Hauptkette und/oder an den Endgruppen durch eine oder mehrere funktionelle Gruppen, insbesondere ausgewählt aus Mercaptan-Gruppen, Alkoxysilan-Gruppen und Hydroxy-Gruppen, substituiert, besonders bevorzugt durch mehrere funktionelle Gruppen, die Mercaptan-Gruppen und Alkoxysilan-Gruppen sind. Bevorzugt ist der mindestens eine funktionalisierte SBR-Kautschuk SPRINTAN^{®} SLR 3402 der Fa. Trinseo.

Bei dem funktionalisierten SBR-Kautschuk kann es sich um lösungspolymerisierten Styrol-Butadien-Kautschuk (SSBR) oder um emulsionspolymerisierten Styrol-Butadien-Kautschuk (ESBR) handeln, wobei auch ein Gemisch aus mindestens einem funktionalisierten SSBR und mindestens einem funktionalisierten ESBR eingesetzt werden kann.

Das Molgewicht (Mw) der Styrol-Butadien-Copolymere kann über einen weiten Bereich variieren. Bevorzugt sind Styrol-Butadien-Copolymere mit einem Mw von 250000 bis 600000 g/mol, besonders bevorzugt mit einem Mw von 350000 bis 500000 g/mol.

Bevorzugt ist der mindestens eine funktionalisierte BR-Kautschuk an der Hauptkette und/oder an den Endgruppen durch eine oder mehrere funktionelle Gruppen, ausgewählt aus Mercaptan-Gruppen, Alkoxysilan-Gruppen und Hydroxy-Gruppen, substituiert, besonders bevorzugt durch Alkoxysilan-Gruppen. Bevorzugt ist der mindestens eine funktionalisierte BR-Kautschuk NIPOL^{®} BR 1261 der Fa. Zeon.

Das Molgewicht der Butadien-Polymere kann über einen weiten Bereich variieren. Bevorzugt sind Butadien-Polymere mit einem Mw von 250000 bis 5000000 g/mol.

Polybutadien mit einem cis-Anteil größer oder gleich 90 Gew.-% wird als high-cis-Typ und Polybutadien mit einem cis-Anteil kleiner als 90 Gew.-% wird als low-cis-Typ bezeichnet. Ein low-cis-Polybutadien ist z.B. Li-BR (Lithium-katalysierter Butadien-Kautschuk) mit einem cis-Anteil von 20 bis 50 Gew.-%. Bevorzugt im Rahmen der vorliegenden Erfindung ist ein high-cis-Typ funktionalisierter BR-Kautschuk.

Die erfindungsgemäßen Kautschukmischungen enthalten bevorzugt 0 bis 100 phr mindestens eines funktionalisierten Synthesekautschuks, besonders bevorzugt 50 bis 100 phr, ganz besonders bevorzugt 70-100 phr.

Die erfindungsgemäßen Kautschukmischungen enthalten bevorzugt mindestens einen funktionalisierten SBR- und mindestens einen funktionalisierten BR-Kautschuk im Gewichtsverhältnis SBR:BR von 100:0 bis 0:100, besonders bevorzugt von 90:10 bis 10:90, ganz besonders bevorzugt von 90:10 bis 30:70, meist bevorzugt von 80:20 bis 50:50.

Die erfindungsgemäßen Kautschukmischungen enthalten bevorzugt 0 bis 100 phr mindestens eines unfunktionalisierten Synthesekautschuks und/oder mindestens eines Naturkautschuks, besonders bevorzugt 0 bis 50 phr, ganz besonders bevorzugt 0 bis 30 phr.

### Füllstoffe

Der mindestens eine hydroxylgruppenhaltige oxidische Füllstoff ist bevorzugt ausgewählt aus der Gruppe bestehend aus Kieselsäuren, synthetischen Silikaten und natürlichen Silikaten.

Der Gehalt an hydroxylgruppenhaltigen oxidischen Füllstoffen in den erfindungsgemäßen Kautschukmischungen beträgt bevorzugt 0,1 bis 250 phr, besonders bevorzugt 20 bis 200 phr, ganz besonders bevorzugt 50 bis 180 phr und meist bevorzugt 110 bis 160 phr.

Als hydroxylgruppenhaltige oxidische Füllstoffe eignen sich bevorzugt solche aus der Reihe der
- Kieselsäuren, insbesondere mit einer spezifischen Oberfläche (BET) von 5 bis 1000, vorzugsweise 20 bis 400 m²/g, vorzugsweise mit Primärteilchengrößen von 100 bis 400 nm, wobei die Kieselsäuren gegebenenfalls auch als Mischoxide mit anderen Metalloxiden, wie Al-, Mg-, Ca-, Ba-, Zr-, Ti-oxiden vorliegen,
- synthetischen Silikate, wie Aluminiumsilikat, Erdalkalisilikate wie Magnesiumsilikat oder Calciumsilikat, mit spezifischen Oberflächen (BET) von 20 bis 400 m²/g, vorzugsweise mit Primärteilchengrößen von 10 bis 400 nm
   und
- natürlichen Silikate, wie Kaolin und andere natürliche vorkommende Kieselsäuren,
sowie Mischungen davon.

Die oben genannten BET Oberflächen werden gemäß DIN ISO 9277 bestimmt. Die Größenangaben der Primärteilchengrößen basieren auf Messungen mit einem Prüfgerät zur Partikelanalyse mittels Streulicht. Die Berechnung der Partikelgröße basiert dabei auf der Mie-Theorie, welche die Wechselwirkung zwischen Licht und Materie beschreibt (DIN/ISO 13320).

Bevorzugt sind die Kieselsäuren durch Fällung von Lösungen von Silikaten oder Flammenhydrolyse von Siliciumhalogeniden erhältlich.

Bevorzugt enthalten die erfindungsgemäßen Kautschukmischungen mindestens einen hydroxylgruppenhaltigen oxidischen Füllstoff aus der Reihe der Kieselsäuren, insbesondere mit einer spezifischen Oberfläche (BET) im Bereich von 5 bis 1000, bevorzugt 20 bis 400 m²/g in einer Menge von 0,1 bis 250 phr, bevorzugt 20 bis 200 phr, besonders bevorzugt von 50 bis 180 phr, ganz besonders bevorzugt 110 bis 160 phr.

In einer ganz besonders bevorzugten Ausführungsform enthalten die erfindungsgemäßen Kautschukmischungen mindestens einen hydroxylgruppenhaltigen oxidischen Füllstoff aus der Reihe der Kieselsäuren in einer Menge von 110 bis 160 phr. Dadurch wird die weitere, bevorzugte Aufgabe gelöst, Kautschukmischungen mit einer verbesserten Dispergierbarkeit der Füllstoffe, wie den mindestens einen hydroxylgruppenhaltigen oxidischen Füllstoff, bereitzustellen.

Die erfindungsgemäßen Kautschukmischungen können als Füllstoff mindestens einen Ruß enthalten.

In einer bevorzugten Ausführungsform enthalten die erfindungsgemäßen Kautschukmischungen als Füllstoff mindestens einen Ruß.

Bevorzugt enthalten die erfindungsgemäßen Kautschukmischungen mindestens einen Ruß in einer Menge von 0,1 bis 120 phr, besonders bevorzugt 0,1 bis 100 phr, ganz besonders bevorzugt 1 bis 70 phr, meist bevorzugt 2 bis 40 phr.

Bevorzugt sind Ruße, die nach dem Flammruß-, Furnace- oder Gasrußverfahren erhältlich sind und die eine spezifische Oberfläche (BET) im Bereich von 20 bis 200 m²/g besitzen, wie z.B. SAF-, ISAF-, IISAF-, HAF-, FEF- oder GPF-Ruße. Bevorzugt enthalten die erfindungsgemäßen Kautschukmischungen mindestens einen Ruß mit einer spezifische Oberfläche (BET) im Bereich von 20 bis 200 m²/g .

Besonders bevorzugt enthalten die erfindungsgemäßen Kautschukmischungen als Füllstoffe mindestens eine der oben genannten Kieselsäuren und mindestens einen der oben genannten Ruße.

Ganz besonders bevorzugt enthalten die erfindungsgemäßen Kautschukmischungen als Füllstoffe 50 bis 180 phr, bevorzugt 110 bis 160 phr, mindestens eine der oben genannten Kieselsäuren und 1,0 bis 70 phr, bevorzugt 2,0 bis 40 phr, mindestens einen der oben genannten Ruße.

Die Gesamtmenge an Ruß und kieselsäurebasierenden Füllstoffen in der erfindungsgemäßen Kautschukmischung beträgt bevorzugt 51 bis 250 phr, besonders bevorzugt 112 bis 200 phr.

### Vernetzer und Vulkanisationsbeschleuniger

Die erfindungsgemäßen Kautschukmischungen enthalten mindestens einen Vernetzer aus der Reihe Schwefel und Schwefelspender. Sie können weiter mindestens einen Vulkanisationsbeschleuniger enthalten.

### Vernetzer

Die erfindungsgemäßen Kautschukmischungen enthalten mindestens einen Vernetzer aus der Reihe Schwefel und Schwefelspender.

Schwefel kann in elementarer löslicher oder unlöslicher Form eingesetzt werden. Besonders bevorzugt enthalten die erfindungsgemäßen Kautschukmischungen mindestens einen Schwefelspender und/oder Schwefel, ganz besonders bevorzugt Schwefel.

Als Schwefelspender kommen beispielsweise Dimorpholyldisulfid (DTDM), 2-Morpholinodithiobenzothiazol (MBSS), Caprolactamdisulfid, Dipentamethylen-thiuramtetrasulfid (DPTT), Tetramethylthiuramdisulfid (TMTD) und Tetrabenzyl-thiuramdisulfid (TBzTD) in Frage.

Die erfindungsgemäßen Kautschukmischungen enthalten im Allgemeinen 0,1 bis 20 phr, bevorzugt 0,5 bis 10 phr, besonders bevorzugt von 1,0 bis 8 phr und meist bevorzugt 1 bis 4 phr des mindestens einen Vernetzers aus der Reihe Schwefel und Schwefelspender.

Zinkoxid kann in den erfindungsgemäßen Kautschukmischungen zugegen sein.

Bevorzugte erfindungsgemäße Kautschukmischungen enthalten Zinkoxid mit einer BET-Oberfläche von 2 bis 100 m²/g, bevorzugt 2 bis 70 m²/g. BET-Oberflächen von Zinkoxid können gemäß DIN ISO 9277 gemessen werden.

Im Allgemeinen ist Zinkoxid in einer Menge von 0 bis 20 phr, bevorzugt von 0,1 bis 10 phr, besonders bevorzugt von 1 bis 5 phr in den erfindungsgemäßen Kautschukmischungen enthalten.

### Vulkanisationsbeschleuniger

Die erfindungsgemäßen Kautschukmischungen können mindestens einen Vulkanisationsbeschleuniger enthalten.

Bevorzugt enthalten die erfindungsgemäßen Kautschukmischungen mindestens einen Vulkanisationsbeschleuniger.

Die Menge des mindestens einen Vulkanisationsbeschleunigers in der erfindungsgemäßen Mischung beträgt 0 bis 20 phr, bevorzugt 0,1 bis 10 phr und besonders bevorzugt 0,2 bis 5 phr.

Besonders bevorzugt ist der mindestens eine Vulkanisationsbeschleuniger ausgewählt aus der Gruppe der Mercaptobenzthiazole, Thiocarbamate, Dithiocarbamate, Thiurame, Thiazole, Sulfenamide, Thiazolsulfenamide, Xanthogenate, bi- oder polycyclische Amine, Thiophosphate, Dithiophosphate, Caprolactame, Thioharnstoffderivate, Guanidine, cyclischen Disulfane sowie Amine, insbesondere Zink-diamindiisocyanat, Hexamethylentetramin, 1,3-Bis(citraconimidomethyl)benzol, und ganz besonders bevorzugt aus der Gruppe der Sulfenamide, meist bevorzugt N-Cyclohexylbenzothiazolsulfenamid (CAS-Nr.: 95-33-0).

Bevorzugt enthalten die erfindungsgemäßen Kautschukmischungen mindestens einen Vulkanisationsbeschleuniger, der N-Cyclohexylbenzothiazolsulfenamid enthält.

In der erfindungsgemäßen Mischung können Guanidin-haltige Verbindungen als der mindestens eine Vulkanisationsbeschleuniger enthalten oder gar nicht enthalten sein.

Guanidin-haltige Verbindungen sind beispielsweise Diphenylguanidin (DPG), Di-ortho-tolylguanidin (DOTG), 1-(ortho-Tolyl)biguanid, substituierte Diphenylguanidine und andere organische Guanidin-Derivate, bei denen die Guanidinfunktion mit ein oder mehreren C₁-C₈ Alkylgruppen, C₂-C₈ Alkenylgruppen, C₆-C₈ Arylgruppen, C₇-C₁₀ Aralkylgruppen und/oder C₁-C₈ Heteroalkylgruppen substituiert ist.

Unter dem Begriff substituierte Diphenylguanidine sind im Sinne der vorliegenden Erfindung bevorzugt solche Diphenylguanidine zu verstehen, bei denen mindestens ein Phenyl-Ring substituiert ist, bevorzugt beide Phenyl-Ringe substituiert sind. Als Substituenten sind verschiedenste Substituenten möglich. Bevorzugt ist ein Substituent eines Phenyl-Rings ausgewählt aus der Gruppe bestehend aus C₁-C₂₀-Alkyl, das substituiert oder unsubstituiert ist, C₂-C₂₀-Alkenyl, das substituiert oder unsubstituiert ist und eine oder mehrere Doppelbindungen enthält, C₂-C₂₀-Alkinyl, das substituiert oder unsubstituiert ist und eine oder mehrere Dreifachbindungen enthält, C₃-C₂₀-Aryl, das substituiert oder unsubstituiert ist, Heteroaryl, das substituiert oder unsubstituiert ist, fünf- bis zwanzig-gliedrig ist und ein oder mehrere Heteroatome enthält, C₃-C₁₄-Cycloalkyl, das substituiert oder unsubstituiert ist, Heterocycloalkyl, das substituiert oder unsubstituiert ist, drei- bis acht-gliedrig ist und ein oder mehrere Heteroatome enthält, und Heteroatomen.

In einer bevorzugten Ausführungsform ist in der erfindungsgemäßen Mischung mindestens eine Guanidin-haltige Verbindung in dem mindestens einen Vulkanisationsbeschleuniger enthalten, besonders bevorzugt DPG.

Ganz besonders bevorzugt enthält der mindestens eine Vulkanisationsbeschleuniger in der erfindungsgemäßen Kautschukmischung N-Cyclohexylbenzothiazolsulfenamid und DPG, meist bevorzugt besteht der mindestens eine Vulkanisationsbeschleuniger aus N-Cyclohexylbenzothiazolsulfenamid und DPG.

Die Gesamtmenge an Vernetzer und Vulkanisationsbeschleuniger in den Kautschukmischungen beträgt bevorzugt 0,5 bis 30 phr, besonders bevorzugt von 1,1 bis 18 phr, meist bevorzugt 1,2 bis 9 phr.

### Nichtaromatische, polare Substanz mit 4-12 Kohlenstoffatomen

Die erfindungsgemäßen Kautschukmischungen enthalten mindestens eine nichtaromatische, polare Substanz mit 4-12 Kohlenstoffatomen, bevorzugt mit 5-10 Kohlenstoffatomen, die
- Kohlenstoff-, Wasserstoff- und Sauerstoffatome enthält,
- einen Bereich von mindestens zwei chemisch verbundenen Kohlenstoffatomen aufweist,
- eine Hydroxylgruppe und mindestens eine weitere Sauerstoff enthaltende Gruppe ausgewählt aus Hydroxyl-, Ester-, Ether-, Acetal-, Ketal-, Aldehyd- und Carbonsäuregruppen enthält, wobei die Hydroxylgruppe und die weitere Sauerstoff enthaltende Gruppe nicht mehr als 3 Positionen entlang einer Molekülkette voneinander entfernt sind, und
- verschieden ist von 1,1,1-Trimethylolpropan (TMP).

Die mindestens eine nichtaromatische, polare Substanz enthält 4-12 Kohlenstoffatome, bevorzugt 5-10 Kohlenstoffatome.

Bevorzugt enthält die mindestens eine nichtaromatische, polare Substanz mit 4-12 Kohlenstoffatomen eine Hydroxylgruppe und mindestens eine weitere Sauerstoff enthaltende Gruppe ausgewählt aus Hydroxyl-, Ester- und Ether-Gruppen, besonders bevorzugt ausgewählt aus Hydroxyl- und Ester-Gruppen, wobei die Hydroxylgruppe und die weitere Sauerstoff enthaltende Gruppe nicht mehr als 3 Positionen entlang einer Molekülkette voneinander entfernt sind. Ganz besonders bevorzugt enthält die mindestens eine nichtaromatische, polare Substanz mit 4-12 Kohlenstoffatomen eine Hydroxylgruppe und mindestens eine weitere Hydroxyl-Gruppe und ggfs. eine Ester-Gruppe.

Bevorzugt ist die mindestens eine nichtaromatische, polare Substanz mit 4-12 Kohlenstoffatomen ausgewählt aus der Gruppe bestehend aus Diethylenglykol, Dipropylenglykol, 2-sec-Butyl-2-methyl-1,3-propandiol, 2,2'-Oxydi-1-propanol, 1,1'-Oxydi-2-propanol, 2-(2-Hydroxypropoxy)-1-propanol, 2-Methyl-1,3-propandiol, 2,2,4-Trimethyl-1,3-pentandiol, 2-Ethyl-1,3-hexandiol, Trimethylolethan, Ditrimethylolpropan, 2,2,2',2',-Tetrakis(hydroxymethyl)-3,3'-oxydipropan-1-ol (Dipentaerythrit), 2,2-Dimethylpropan-1,3-diol (CAS-Nr. 126-30-7) und Hydroxypivalinsäureneopentylglycolester (2,2-Dimethyl-1,3-propandiol-mono(hydroxypivalat), CAS-Nr: 1115-20-4), besonders bevorzugt ausgewählt aus Dipropylenglykol, 2-sec-Butyl-2-methyl-1,3-propandiol, 2,2,2',2',-Tetrakis(hydroxymethyl)-3,3'-oxydipropan-1-ol (Dipentaerythrit), 2,2-Dimethylpropan-1,3-diol (CAS-Nr. 126-30-7) und Hydroxypivalinsäureneopentylglycolester (2,2-Dimethyl-1,3-propandiol-mono-(hydroxypivalat), CAS-Nr: 1115-20-4), meist bevorzugt ausgewählt aus 2,2-Dimethylpropan-1,3-diol (CAS-Nr. 126-30-7) und Hydroxypivalinsäureneopentylglycolester (2,2-Dimethyl-1,3-propandiol-mono(hydroxypivalat), CAS-Nr: 1115-20-4).

Im Rahmen der vorliegenden Erfindung ist die mindestens eine nichtaromatische, polare Substanz mit 4-12 Kohlenstoffatomen verschieden von 1,1,1-Trimethylolpropan (2-Ethyl2(hydroxymethyl)-1,3-propandiol, TMP).

Weiter bevorzugt ist die mindestens eine nichtaromatische, polare Substanz mit 4-12 Kohlenstoffatomen verschieden von 1,1,1-Trimethylolpropan (2-Ethyl2(hydroxymethyl)-1,3-propandiol, TMP) und einer oder mehreren der Verbindungen ausgewählt aus der Gruppe bestehend aus 1,2-Pentandiol, 2-Methyl-2-propyl-1,3-propandiol, 2-Butyl-2-ethyl-1,3-propandiol, Glycerin, Pentaerythrit, Erythrit, Xylit, Sorbit, Mannit und Inosit, besonders bevorzugt von 1,1,1-Trimethylolpropan (2-Ethyl2(hydroxymethyl)-1,3-propandiol, TMP) und allen Verbindungen der Gruppe bestehend aus 1,2-Pentandiol, 2-Methyl-2-propyl-1,3-propandiol, 2-Butyl-2-ethyl-1,3-propandiol, Glycerin, Pentaerythrit, Erythrit, Xylit, Sorbit, Mannit und Inosit.

Bevorzugt ist die Gesamtmenge von 1,1,1-Trimethylolpropan, bevorzugt von 1,1,1-Trimethylolpropan und einer oder mehreren der Verbindungen ausgewählt aus der Gruppe bestehend aus 1,2-Pentandiol, 2-Methyl-2-propyl-1,3-propandiol, 2-Butyl-2-ethyl-1,3-propandiol, Glycerin, Pentaerythrit, Erythrit, Xylit, Sorbit, Mannit und Inosit, besonders bevorzugt von 1,1,1-Trimethylolpropan und allen Verbindungen der Gruppe bestehend aus 1,2-Pentandiol, 2-Methyl-2-propyl-1,3-propandiol, 2-Butyl-2-ethyl-1,3-propandiol, Glycerin, Pentaerythrit, Erythrit, Xylit, Sorbit, Mannit und Inosit, in den erfindungsgemäßen Kautschukmischungen kleiner als 0,1 phr, besonders bevorzugt kleiner als 0,05 phr, ganz besonders bevorzugt kleiner als 0,01 phr, meist bevorzugt kleiner als 0,001 phr.

Im Rahmen dieser Erfindung dient die mindestens eine nichtaromatische, polare Substanz mit 4-12 Kohlenstoffatomen dazu, toxikologisch weniger bedenkliche Kautschukmischungen bereitzustellen, verglichen mit Kautschukmischungen der WO2010136345A1, bei denen die anwendungsrelevanten Eigenschaften, bevorzugt die Nassrutschfestigkeit und der Rollwiderstand, gleich gut, und Mooney Viskosität, Anvulkanisationssicherheit und Füllstoffdispersion gleich gut, bevorzugt besser, sind als bei den entsprechenden TMP-haltigen Kautschukmischungen.

Bevorzugt ist die mindestens eine nichtaromatische, polare Substanz mit 4-12 Kohlenstoffatomen im Rahmen der vorliegenden Erfindung verschieden von den sonstigen Inhaltsstoffen der erfindungsgemäßen Kautschukmischung, wie dem mindestens einen Kautschuk, dem mindestens einen hydroxylgruppenhaltigen oxidischen Füllstoff, dem mindestens einen Verstärkungsadditiv aus der Reihe der schwefelhaltigen organischen Silane, dem mindestens einen Vernetzer aus der Reihe Schwefel und Schwefelspender, der mindestens einen Fettsäure, dem optionalen mindestens einen Vulkanisationsbeschleuniger und dem optionalen einen oder mehrere Kautschukhilfsmittel.

Die mindestens eine nichtaromatische, polare Substanz mit 4-12 Kohlenstoffatomen ist in den erfindungsgemäßen Kautschukmischungen bevorzugt in einer Menge von 0,1 - 10 phr enthalten, besonders bevorzugt von 0,2 - 8 phr, ganz besonders bevorzugt von 0,3 - 5 phr, meist bevorzugt von 0,4 - 2 phr.

### Verstärkungsadditive

Die erfindungsgemäßen Kautschukmischungen enthalten mindestens ein Verstärkungsadditiv aus der Reihe der schwefelhaltigen organischen Silane.

Bevorzugte schwefelhaltige organische Silane sind bifunktionelle schwefelhaltige organische Silane, die am Siliciumatom mindestens eine Alkoxy-, Cycloalkoxy-, oder Phenoxygruppe aufweisen und als andere Funktionalität eine Gruppe ausgewählt aus - SCN, -SH oder -Sx- mit x = 2 bis 8.

Besonders bevorzugt sind Alkoxysilylgruppen-haltige schwefelhaltige Silane und ganz besonders bevorzugt Trialkoxysilylgruppen-haltige schwefelhaltige organische Silane.

Meist bevorzugt enthalten die erfindungsgemäßen Kautschukmischungen ein oder mehrere schwefelhaltige Silane aus der Reihe Bis-(triethoxysilylpropyl)-tetrasulfan, Bis-(triethoxysilylpropyl -disulfan und 3-(Triethoxysilyl)-1-propanthiol.

Flüssige schwefelhaltige Silane können zur besseren Dosierbarkeit und/oder Dispergierbarkeit auf einem Träger aufgezogen werden (dry liquid). Der Gehalt an schwefelhaltigen Silanen in diesen "dry liquids" liegt bevorzugt zwischen 30 und 70 Gew.-Teilen, besonders bevorzugt zwischen 40 und 60 Gew.-Teilen je 100 Gew.-Teile dry liquid.

Die erfindungsgemäßen Kautschukmischungen enthalten im Allgemeinen 0,1 bis 20 phr, vorzugsweise 0,5 bis 15 phr und besonders bevorzugt 1,0 bis 10 phr an mindestens einem Verstärkungsadditiv aus der Reihe der schwefelhaltigen organischen Silane.

### Fettsäure

Die erfindungsgemäßen Kautschukmischungen enthalten mindestens eine Fettsäure.

Geeignete Fettsäuren sind natürlich vorkommende und synthetische Fettsäuren und Mischungen davon. Bevorzugt sind gesättigte und ungesättigte aliphatische geradkettige, verzweigte oder cyclische Carbonsäuren mit einer Kohlenstoffanzahl von 6 bis 22, bevorzugt 8 bis 20 sowie Mischungen davon.

Beispiele sind natürlich vorkommende gesättigte Fettsäuren wie Capronsäure (Hexansäure), Caprylsäure (Oktansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), und Cerotinsäure (Hexacosansäure) sowie Mischungen daraus. Weiterhin kann 2-Ethylhexan-säure verwendet werden.

Weitere Beispiele sind einfach oder mehrfach ungesättigte Fettsäuren sowie Mischungen davon, wie Myristoleinsäure (9-Tetradecensäure), Palmitoleinsäure (9-Hexadecensäure), Ölsäure (9-Oktadecensäure), Vaccensäure (11-Oktadecensäure), Petroselinsäure (6-Oktadecensäure), Gadoleinsäure (9-Eicosensäure), 11-Eicosensäure, Erucasäure (13-Docosensäure), Linolsäure (9,12-Octadecadiensäure), Linolensäure (9,12,15-Octadecatriensäure) sowie Mischungen daraus.

Weitere Beispiele sind gesättigte oder ungesättigte Hydroxy-substituierte Fettsäuren, wie Rizinol-Säure, sowie Fettsäuren mit alicyclischen Seitenketten, insbesondere Cyclopentenyl-Fettsäuren.

Auch Gemische von Fettsäuren sind geeignet, wie solche, die auf natürlichen Rohstoffen basieren, die beispielsweise bei der Fettsäurespaltung anfallen, wie beispielsweise Kokos- , Raps- und Sojafettsäuren, sowie deren Fraktionen, aber auch andere technische Gemische, die überwiegend aus Fettsäuren bestehen, wie beispielsweise Tallöl-Fettsäuren und insbesondere Talg-Fettsäuren.

In einer bevorzugten Ausführungsform ist die mindestens eine Fettsäure ausgewählt aus Palmitinsäure und Stearinsäure, oder Mischungen davon, besonders bevorzugt Stearinsäure.

Die erfindungsgemäßen Kautschukmischungen enthalten die mindestens eine Fettsäure bevorzugt in Mengen von 0,3 - 15 phr, besonders bevorzugt von 0,5 - 10 phr, ganz besonders bevorzugt von 0,9 - 10 phr, meist bevorzugt von 1,2 - 8 phr.

Die erfindungsgemäßen Kautschukmischungen enthalten die mindestens eine nichtaromatische, polare Substanz mit 4-12 Kohlenstoffatomen und die mindestens eine Fettsäure in einem Gewichtsverhältnis bevorzugt von 10 : 1 bis 1 : 20, besonders bevorzugt von 5 : 1 - 1: 10, ganz besonders bevorzugt von 2:1 - 1:10, meist bevorzugt von 1:1 - 1:6.

In einer besonders bevorzugten Ausführungsform enthalten die erfindungsgemäßen Kautschukmischungen die mindestens eine Fettsäure in mindestens einer gleichen Menge bezogen auf die mindestens eine nichtaromatische, polare Substanz mit 4-12 Kohlenstoffatomen, bevorzugt in einem Gewichtsverhältnis von der mindestens einen nichtaromatischen, polaren Substanz mit 4-12 Kohlenstoffatomen zu der mindestens einen Fettsäure von 1:1 - 1: 20, ganz besonders bevorzugt von 1:1 - 1:10, meist bevorzugt von 1:1 - 1:6.

### Mischung A

Die mindestens eine nichtaromatische, polare Substanz mit 4-12 Kohlenstoffatomen und die mindestens eine Fettsäure können den Kautschukmischungen separat zugefügt werden oder gemeinsam in Form einer Mischung.

Bevorzugt werden die mindestens eine nichtaromatische, polare Substanz mit 4-12 Kohlenstoffatomen und die mindestens eine Fettsäure den Kautschukmischungen in Form einer sie enthaltenden Mischung, der erfindungsgemäßen Mischung A, zugesetzt.

Die erfindungsgemäße Mischung A enthält mindestens eine nichtaromatische, polare Substanz mit 4-12 Kohlenstoffatomen, bevorzugt mit 5-10 Kohlenstoffatomen, die:
- Kohlenstoff-, Wasserstoff- und Sauerstoffatome enthält,
- einen Bereich von mindestens zwei chemisch verbundenen Kohlenstoffatomen aufweist,
- eine Hydroxylgruppe und zumindest eine weitere Sauerstoff enthaltende Gruppe ausgewählt aus Hydroxyl-, Ester-, Ether-, Acetal-, Ketal-, Aldehyd- und Carbonsäuregruppen enthält, wobei die Hydroxylgruppe und die weitere Sauerstoff enthaltende Gruppe nicht mehr als 3 Positionen entlang einer Molekülkette voneinander entfernt sind, und
- verschieden ist von 1,1,1-Trimethylolpropan (TMP),
zu 10 - 40 Gew.-%, bevorzugt zu 20 - 35 Gew.-%, und die mindestens eine Fettsäure zu 60 - 90 Gew.-%, bevorzugt zu 65 - 80 Gew.-%, bezogen auf die Gesamtmenge von Mischung A.

Die oben für die in den erfindungsgemäßen Kautschukmischungen enthaltene mindestens eine nichtaromatische, polare Substanz mit 4-12 Kohlenstoffatomen und die mindestens eine Fettsäure angeführten Beschreibungen und Vorzugsbereiche gelten für diese in Mischung A enthaltenen Komponenten analog.

Mischung A besteht bevorzugt zu mindestens 80 Gew.-%, besonders bevorzugt zu mindestens 90 Gew.-%, ganz besonders bevorzugt zu mindestens 95 Gew.-% aus der mindestens einen nichtaromatischen, polaren Substanz mit 4-12 Kohlenstoffatomen und der mindestens einen Fettsäure, bezogen auf die Gesamtmenge der Mischung A.

Mischung A kann weiterhin beispielsweise weitere Verarbeitungshilfsstoffe, wie Polyole, bevorzugt Polyethylenglykol, oder Streckmittel etc. enthalten, bevorzugt in einer Menge von maximal 20 Gew.-%, besonders bevorzugt in einer Menge von maximal 10 Gew.-%, ganz besonders bevorzugt in einer Menge von maximal 5 Gew.-% , bezogen auf die Gesamtmenge der Mischung A.

Mischung A enthält die mindestens eine nichtaromatische, polare Substanz mit 4-12 Kohlenstoffatomen und die mindestens eine Fettsäure bevorzugt in einem Gewichtsverhältnis von 10 : 1 bis 1 : 20, besonders bevorzugt von 5 : 1 - 1: 10, ganz besonders bevorzugt von 2:1 - 1:5, meist bevorzugt von 1:1 - 1:4.

In einer besonders bevorzugten Ausführungsform enthält Mischung A die mindestens eine Fettsäure in mindestens einer gleichen Menge bezogen auf die mindestens eine nichtaromatische, polare Substanz mit 4-12 Kohlenstoffatomen, bevorzugt in einem Gewichtsverhältnis von der mindestens einen nichtaromatischen, polaren Substanz mit 4-12 Kohlenstoffatomen zu der mindestens einen Fettsäure von 1:1 - 1: 20, ganz besonders bevorzugt von 1:1 - 1:10, ganz ganz besonders bevorzugt von 1:1 - 1:5 und meist bevorzugt von 1:1 - 1:4.

Die erfindungsgemäßen Kautschukmischungen enthalten die Mischung A bevorzugt in einer Menge von 1 - 10 phr, besonders bevorzugt von 2 - 8 phr, ganz besonders bevorzugt von 2,5 - 6 phr.

Ein weiterer Gegenstand der vorliegenden Erfindung ist ein Verfahren zur Herstellung der erfindungsgemäßen Mischungen A, dadurch gekennzeichnet, dass in einem Mischprozess die jeweiligen Komponenten gemischt werden.

Bevorzugt werden die mindestens eine Fettsäure und die mindestens eine nichtaromatische, polare Substanz mit 4-12 Kohlenstoffatomen sowie gegebenenfalls weitere Verarbeitungshilfsstoffe in den genannten allgemeinen und bevorzugten Mengen miteinander vermischt.

### Kautschukhilfsmittel

Die erfindungsgemäßen Kautschukmischungen können weiterhin ein oder mehrere Kautschukhilfsmittel enthalten. Als Kautschukhilfsmittel kommen beispielsweise Alterungsschutzmittel, Haftmittel, Wärmestabilisatoren, Lichtschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren, Verzögerer, und Reversionsschutzmittel in Frage.

Die erfindungsgemäßen Kautschukmischungen können ein oder mehrere Alterungsschutzmittel enthalten. Als solche geeignet sind aminische Alterungsschutzmittel wie z. B. Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylendiaminbasis, z. B. N,N'-Dicyclohexyl-p-phenylendiamin (CCPD), N-Isopropyl-N'-phenyl-p-phenylendiamin, N-(1,3-Dimethyl-butyl)-N'-phenyl-p-phenylen-diamin (6PPD), N-1,4-Dimethylpentyl-N'-phenyl-p phenylendiamin (7PPD), N,N'-bis-(1,4-Dimethylpentyl)-p-phenylendiamin (77PD) sowie Phosphite wie Tris-(nonylphenyl)phosphit, polymerisiertes 2,2,4-Trimethyl-1,2-dihydrochinolin (TMQ), Methyl-2-Mercapto-benzimidazol (MMBI) und Zinkmethylmercaptobenzimidazol (ZMMBI) sowie Mischungen davon. Besonders bevorzugt wird das mindestens eine Alterungsschutzmittel ausgewählt aus der Gruppe bestehend aus N,N'-Dicyclohexyl-p-phenylendiamin (CCPD), N-(1,3-Dimethyl-butyl)-N'-phenyl-p-phenylen-diamin (6PPD) und polymerisiertes 2,2,4-Trimethyl-1,2-dihydrochinolin (TMQ), meist bevorzugt) N-(1,3-Dimethyl-butyl)-N'-phenyl-p-phenylen-diamin (6PPD) und polymerisiertes 2,2,4-Trimethyl-1,2-dihydrochinolin (TMQ).

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, z.B. aromatisches Prozessöl, Paraffine und PE-Wachse, Fettalkohole mit 6 bis 20 C-Atomen, Ketone, Carbonsäuren, wie Fettsäuren und Montansäuren, oxidiertes PE-Wachs, aromatisch modifizierte cycloaliphatische Kohlenwasserstoffharze, Metallsalze von Carbonsäuren, Carbonsäureamide sowie Carbonsäureester.

Um die Entflammbarkeit zu vermindern und die Rauchentwicklung beim Verbrennen zu verringern, können die erfindungsgemäße Kautschukmischungen Flammschutzmittel enthalten. Hierfür werden beispielsweise Antimontrioxid, Phosphorsäureester, Chlorparaffin, Aluminiumhydroxid, Borverbindungen, Zinkverbindungen ausgenommen ZnO, Molybdäntrioxid, Ferrocen, Calciumcarbonat oder Magnesiumcarbonat verwendet.

Vor der Vernetzung können der erfindungsgemäßen Kautschukmischungen auch weitere Kunststoffe beigefügt werden, die beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Methylstyrol, Cumaren, Inden, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

Bekannte Haftmittel basieren auf Resorcin, Formaldehyd und Silica, die sogenannten RFS-Direkthaftsysteme. Diese Direkthaftsysteme können in beliebiger Menge der erfindungsgemäßen Kautschukmischung zu jedem Zeitpunkt des Einmischens in die erfindungsgemäßen Kautschukmischungen, eingesetzt werden.

Darüber hinaus können die erfindungsgemäßen Kautschukmischungen mindestens einen Vulkanisationsverzögerer enthalten.

Als solche kommen beispielsweise Vulkanisationsverzögerer aus der Gruppe der Sulfenamid-Verzögerer basierend auf acidischen Verbindungen wie Phthalsäure, Phthalsäureanhydrid, Benzoesäure oder Salicylsäure, und der Gruppe der N-Nitroso-Verbindungen basierend auf Diphenylamin oder Trimethyldihydroquinolin, in Frage.

Bevorzugt ist der mindestens eine Vulkanisationsverzögerer ausgewählt aus der Gruppe bestehend aus Sulfenamid-Verzögerern, ganz besonders bevorzugt ausgewählt aus N-Cyclohexylthiophthalimid und N-Phenyl-N-(trichlormethylsulfenyl)-benzolsulfonamid, meist bevorzugt N-Cyclohexyl-thiophthalimid. Übliche Mengen für den mindestens einen Vulkanisationsverzögerer sind 0,01 - 10 phr.

Die in der erfindungsgemäßen Mischung enthaltenen Kautschukhilfsmittel sind bevorzugt verschieden von den sonstigen Inhaltsstoffen der erfindungsgemäßen Kautschukmischung, wie dem mindestens einen Kautschuk, dem mindestens einen hydroxylgruppenhaltigen oxidischen Füllstoff, dem mindestens einen Verstärkungsadditiv aus der Reihe der schwefelhaltigen organischen Silane, dem mindestens einen Vernetzer aus der Reihe Schwefel und Schwefelspender, der mindestens einen Fettsäure, dem optionalen mindestens einen Vulkanisationsbeschleuniger und der mindestens einen nichtaromatischen, polaren Substanz mit 4-12 Kohlenstoffatomen.

Die Kautschukhilfsmittel können den erfindungsgemäßen Kautschukmischungen in den für diese Hilfsmittel üblichen Mengen, die sich auch nach dem Verwendungszweck der daraus hergestellten Vulkanisate richten, zugesetzt werden. Übliche Mengen sind beispielsweise 0,1 bis 30 phr.

Sofern ein Kautschukhilfsmittel jedoch mit einem der anderen Inhaltsstoffe der erfindungsgemäßen Kautschukmischungen, beispielsweise dem mindestens einen Kautschuk, dem mindestens einen hydroxylgruppenhaltigen oxidischen Füllstoff, dem mindestens einen Verstärkungsadditiv aus der Reihe der schwefelhaltigen organischen Silane, dem mindestens einen Vernetzer aus der Reihe Schwefel und Schwefelspender, der mindestens einen Fettsäure, dem optionalen mindestens einen Vulkanisationsbeschleuniger und/oder der mindestens einen nichtaromatischen, polaren Substanz mit 4-12 Kohlenstoffatomen überlappt, ist dieses Kautschukhilfsmittel bevorzugt nur als Mengenergänzung zu den für diesen anderen Inhaltsstoff angegebenen allgemeinen und bevorzugten Mengenangaben in der erfindungsgemäßen Kautschukmischung enthalten.

Besonders bevorzugt sind erfindungsgemäße Kautschukmischungen enthaltend
- 50 bis 100 phr mindestens eines funktionalisierten Synthesekautschuks, bevorzugt 70 - 100 phr, bevorzugt eines funktionalisierten BR-Kautschuks und/oder funktionalisierten SBR-Kautschuks,
- 0 bis 50 phr mindestens eines Naturkautschuks und/ oder unfunktionalisierten Synthesekautschuks, bevorzugt 0 bis 30 phr,
- 20 bis 200 phr mindestens eines hydroxylgruppenhaltigen oxidischen Füllstoffs,
- 0,5 bis 15 phr mindestens eines Verstärkungsadditives aus der Gruppe der schwefelhaltigen organischen Silane, bevorzugt bifunktionelle schwefelhaltige organische Silane, die am Siliciumatom mindestens eine Alkoxy-, Cycloalkoxy-, oder Phenoxygruppe aufweisen und als andere Funktionalität eine Gruppe ausgewählt aus -SCN, -SH oder -Sx- mit x = 2 bis 8, besonders bevorzugt Alkoxysilylgruppen-haltige schwefelhaltige Silane und ganz besonders bevorzugt Trialkoxysilylgruppen-haltige schwefelhaltige organische Silane,
- 0,1 bis 120 phr mindestens eines Ruß, bevorzugt 0,1 bis 100 phr,
- 0,5 bis 10 phr mindestens eines Vernetzers aus der Reihe Schwefelspender und Schwefel,
- 0,1 bis 10 phr Zinkoxid,
- 0,1 bis 10 phr mindestens eines Vulkanisationsbeschleunigers,
- 0,3 bis 15 phr der mindestens einen Fettsäure, bevorzugt von 0,5 - 10 phr, besonders bevorzugt von 0,9 - 10 phr, ganz besonders bevorzugt von 1,2 - 8 phr, und
- 0,1 bis 10 phr der mindestens einen nichtaromatischen, polaren Substanz mit 4-12 Kohlenstoffatomen, bevorzugt mit 5-10 Kohlenstoffatomen, bevorzugt 0,2 - 8 phr, besonders bevorzugt 0,3 - 5 phr, ganz besonders bevorzugt 0,4 - 2 phr.

Ganz besonders bevorzugt sind zuvor genannte erfindungsgemäße Kautschukmischungen, in denen die mindestens eine nichtaromatische, polare Substanz mit 4-12 Kohlenstoffatomen und die mindestens eine Fettsäure in einem Gewichtsverhältnis bevorzugt von 10 : 1 bis 1 : 20, besonders bevorzugt von 5 : 1 - 1: 10, ganz besonders bevorzugt von 2:1 - 1:10, meist bevorzugt von 1:1 - 1:6, enthalten sind.

Die oben genannten weiteren Vorzugsbereiche der einzelnen Komponenten gelten auch für diese bevorzugten Mischungen.

### Verfahren zur Herstellung der Kautschukmischungen

Ein weiterer Gegenstand der vorliegenden Erfindung ist ein Verfahren zur Herstellung der erfindungsgemäßen Kautschukmischungen, dadurch gekennzeichnet, dass in einem Mischprozess die jeweiligen Komponenten gemischt werden.

Bevorzugt werden mindestens ein Kautschuk in Gegenwart von mindestens einem hydroxylgruppenhaltigen oxidischen Füllstoff, mindestens einem Verstärkungsadditiv aus der Gruppe der schwefelhaltigen organischen Silane, gegebenenfalls mindestens einem Vulkanisationsbeschleuniger, mindestens einer Fettsäure, mindestens einer nichtaromatischen, polaren Substanz mit 4-12 Kohlenstoffatomen sowie gegebenenfalls weiteren Kautschukhilfsmitteln in den genannten allgemeinen und bevorzugten Mengen bei einer Temperatur im Bereich von 50 bis 180°C, besonders bevorzugt 60 bis 170°C, miteinander vermischt.

Die Herstellung der erfindungsgemäßen Kautschukmischungen erfolgt in üblicher Weise in bekannten Mischaggregaten, wie Walzen, Innenmischern, nachgeschalteten Mischwalzwerken und Mischextrudern bei Scherraten von 1 bis 1000 sec⁻¹.

Bevorzugt erfolgt die Herstellung der erfindungsgemäßen Kautschukmischungen in einem dreistufigen Mischprozess.

Bevorzugt werden in einer ersten Mischstufe zunächst Kautschuk, die Füllstoffe sowie ggfs. weitere oben genannte Kautschukhilfsmittel, bevorzugt Alterungsschutzmittel, und gegebenenfalls der mindestens eine Vulkanisationsbeschleuniger, bevorzugt der Guanidin-haltige Vulkanisationsbeschleuniger, die mindestens eine Fettsäure und die mindestens eine nichtaromatische, polare Substanz mit 4-12 Kohlenstoffatomen sowie gegebenenfalls weitere Kautschukhilfsmittel in einem Innenmischer (Kneter) in den Kautschuk eingearbeitet.

Bevorzugt werden der mindestens eine Kautschuk, der mindestens eine hydroxylgruppenhaltige oxidische Füllstoff, das mindestens eine Verstärkungsadditiv aus der Gruppe der schwefelhaltigen organischen Silane, gegebenenfalls der mindestens eine Vulkanisationsbeschleuniger, bevorzugt der Guanidin-haltige Vulkanisationsbeschleuniger, die mindestens eine Fettsäure und die mindestens eine nichtaromatische, polare Substanz mit 4-12 Kohlenstoffatomen sowie gegebenenfalls weitere Kautschukhilfsmittel in der ersten Mischstufe in dem Verfahren zur Herstellung der erfindungsgemäßen Kautschukmischungen gemischt.

Mischtemperaturen im Innenmischer können Werte bis zu 180°C erreichen. Die Temperatur in der ersten Mischstufe beträgt bevorzugt 130 bis 180°C, besonders bevorzugt 140 bis 170°C.

Danach erfolgt als zweiter Schritt bevorzugt das sogenannte Nachzwicken, bevorzugt bei 130 - 180°C, besonders bevorzugt bei 160°C. Das Nachzwicken kann beispielsweise in einem Innenmischer erfolgen.

Bevorzugt werden in einer dritten Mischstufe der mindestens eine Vernetzer aus der Reihe Schwefel und Schwefelspender sowie gegebenenfalls der mindestens eine weitere Vulkanisationsbeschleuniger und gegebenenfalls weitere Kautschukhilfsmittel zu der aus der zweiten Mischstufe erhaltenen Kautschukmischung gegeben. Die Temperatur in der dritten Mischstufe beträgt bevorzugt 50 - 130°C, besonders bevorzugt 60 bis 120°C.

Die Zugabe der mindestens einen nichtaromatischen, polaren Substanz mit 4-12 Kohlenstoffatomen kann zu jedem Zeitpunkt des Mischens erfolgen, vorzugsweise in der ersten Mischstufe bei einer Temperatur im Bereich von 130°C bis 180°C, bevorzugt bei einer Temperatur von 140 bis 170°C.

In einer besonders bevorzugten Ausführungsform des Verfahrens zur Herstellung der erfindungsgemäßen Kautschukmischungen werden
- zunächst der mindestens eine Kautschuk, der mindestens eine hydroxylgruppenhaltige oxidische Füllstoff, das mindestens eine Verstärkungsadditiv aus der Gruppe der schwefelhaltigen organischen Silane, gegebenenfalls der mindestens eine Vulkanisationsbeschleuniger, bevorzugt der Guanidin-haltige Vulkanisationsbeschleuniger, die mindestens eine Fettsäure und die mindestens eine nichtaromatische, polare Substanz mit 4-12 Kohlenstoffatomen sowie gegebenenfalls weitere Kautschukhilfsmittel gemischt, bevorzugt bei 130 bis 180°C,
- dann die erhaltene Mischung dem Nachzwicken ausgesetzt, bevorzugt bei 130 - 180°C, besonders bevorzugt bei 160°C, und
- im Anschluss der mindestens eine Vernetzer aus der Reihe Schwefel und Schwefelspender sowie gegebenenfalls der mindestens eine weitere Vulkanisationsbeschleuniger und gegebenenfalls weitere Kautschukhilfsmittel zu der erhaltenen Kautschukmischung gegeben, bevorzugt bei 50 - 130°C.

### Verfahren zur Herstellung der Kautschukvulkanisate

Die vorliegende Erfindung betrifft weiterhin ein Verfahren zur Herstellung von Kautschukvulkanisaten, dadurch gekennzeichnet, dass die erfindungsgemäße Kautschukmischung bei Temperaturen von 120 bis 200°C, bevorzugt bei 140 bis 180°C, erhitzt wird.

Das Verfahren zur Herstellung der erfindungsgemäßen Kautschukvulkanisate kann in einem weiten Druckbereich durchgeführt werden, bevorzugt wird es bei einem Druck im Bereich von 10 bis 200 bar durchgeführt.

Weiterer Gegenstand der vorliegenden Erfindung sind Kautschukvulkanisate, die erhältlich sind durch Vulkanisation der erfindungsgemäßen Kautschukmischungen.

### Formkörper

Die erfindungsgemäßen Kautschukvulkanisate eignen sich zur Herstellung von Formkörpern aller Art wie z.B. Reifenbauteilen, technischen Gummiartikeln wie Dämpfungselementen, Walzenbelägen, Belägen von Förderbändern, Riemen, Spinnkopsen, Dichtungen, Golfballkernen, Schuhsohlen, insbesondere eignen sie sich zur Herstellung von Reifen und Reifenteilen, wie Reifenlaufflächen, Subtreads, Karkassen Seitenwänden von Reifen, verstärkten Seitenwänden für Notlaufreifen und Apexmischungen. Reifenlaufflächen schließen dabei auch Laufflächen von Sommer-, Winter- und All-Seasons-Reifen sowie Laufflächen von PKW- und LKW-, Leicht-LKW-Reifen ein.

Bevorzugte Formkörper sind Reifen und Reifenteile enthaltend ein erfindungsgemäßes Kautschukvulkanisat.

### Verwendung

Weiterer Gegenstand der vorliegenden Erfindung ist die Verwendung der mindestens einen nichtaromatischen, polaren Substanz mit 4-12 Kohlenstoffatomen, bevorzugt 5-10 Kohlenstoffatomen, die:
- Kohlenstoff-, Wasserstoff- und Sauerstoffatome enthält,
- einen Bereich von mindestens zwei chemisch verbundenen Kohlenstoffatomen aufweist,
- eine Hydroxylgruppe und zumindest eine weitere Sauerstoff enthaltende Gruppe ausgewählt aus Hydroxyl-, Ester-, Ether-, Acetal-, Ketal-, Aldehyd- und Carbonsäuregruppen enthält, wobei die Hydroxylgruppe und die weitere Sauerstoff enthaltende Gruppe nicht mehr als 3 Positionen entlang einer Molekülkette voneinander entfernt sind, und
- verschieden ist von 1,1,1-Trimethylolpropan (TMP),

in schwefelvernetzbaren Kautschukmischungen zur Verbesserung der Verarbeitbarkeit der Kautschukmischungen und zur Verbesserung der Füllstoffdispersion in den Kautschukmischungen.

Meist bevorzugt ist die Verwendung der mindestens einen nichtaromatischen, polaren Substanz mit 4-12 Kohlenstoffatomen, bevorzugt 5-10 Kohlenstoffatomen, die:
- Kohlenstoff-, Wasserstoff- und Sauerstoffatome enthält,
- einen Bereich von mindestens zwei chemisch verbundenen Kohlenstoffatomen aufweist,
- eine Hydroxylgruppe und zumindest eine weitere Sauerstoff enthaltende Gruppe ausgewählt aus Hydroxyl-, Ester-, Ether-, Acetal-, Ketal-, Aldehyd- und Carbonsäuregruppen enthält, wobei die Hydroxylgruppe und die weitere Sauerstoff enthaltende Gruppe nicht mehr als 3 Positionen entlang einer Molekülkette voneinander entfernt sind, und
- verschieden ist von 1,1,1-Trimethylolpropan (TMP),

in einer Menge von 0,1 - 10 phr, bevorzugt 0,2 - 8 phr, besonders bevorzugt 0,3 - 5 phr, ganz besonders bevorzugt 0,4 - 2 phr, in schwefelvernetzbaren Kautschukmischungen zur Verbesserung der Verarbeitbarkeit der Kautschukmischungen und zur Verbesserung der Füllstoffdispersion in den Kautschukmischungen.

In einer besonders bevorzugten Ausführungsform erfolgt die Verwendung der mindestens einen nichtaromatischen, polaren Substanz mit 4-12 Kohlenstoffatomen, bevorzugt 5-10 Kohlenstoffatomen, und der mindestens einen Fettsäure in einem Gewichtsverhältnis bevorzugt von 10 : 1 bis 1 : 20, besonders bevorzugt von 5 : 1 - 1: 10, ganz besonders bevorzugt von 2:1 - 1:10, meist bevorzugt von 1:1 - 1:6, in schwefelvernetzbaren Kautschukmischungen zur Verbesserung der Verarbeitbarkeit der Kautschukmischungen und zur Verbesserung der Füllstoffdispersion in den Kautschukmischungen.

Auch die Verwendung der erfindungsgemäßen Mischung A, bevorzugt in einer Menge von 1 - 10 phr, besonders bevorzugt von 2 - 8 phr, ganz besonders bevorzugt von 2,5 - 6 phr, in schwefelvernetzbaren Kautschukmischungen zur Verbesserung der Verarbeitbarkeit der Kautschukmischungen ist Gegenstand der vorliegenden Erfindung.

Die für die in der erfindungsgemäßen Kautschukmischung enthaltenen und gegebenenfalls enthaltenen Komponenten angeführten Beschreibungen und Vorzugsbereiche gelten für u.a. die offenbarten Verfahren und Verwendungen sowie die Vulkanisate und Formkörper analog.

Ebenso gelten die angeführten Beschreibungen und Vorzugsbereiche für u.a. die erfindungsgemäßen Kautschukmischungen, Mischung A, Vulkanisate, Formkörper, Verfahren und Verwendungen unabhängig davon, ob sie für vorgenannte im Plural (z.B. Kautschukmischungen) oder im Singular (z.B. Kautschukmischung) offenbart wurden.

Die Erfindung soll anhand der folgenden Beispiele erläutert werden, ohne diese jedoch darauf zu beschränken.

### Ausführungsbeispiele

**Tabelle 1: Liste der Einsatzstoffe, Abkürzungen und Hersteller**

| Handelsname | Erläuterung | Hersteller/Vertrieb |
|---|---|---|
| NIPOL^{®} BR1261 | Funktionalisierter Polybutadien Kautschuk (BR) | Zeon |
| SPRINTAN^{®} SLR 3402-Schkopau | Funktionalisierter Styrol-butadien-Kautschuk (SBR) (TG -62 °C) | Trinseo |
| CORAX^{®} N 234 | Ruß | Orion Engineered Carbons GmbH |
| TDAE VIVATEC 500 | aromatisches Prozessöl | Hansen & Rosenthal (H&R GRUPPE) |
| Stearinsäure Pulver | Stearinsäure | Peter Greven GmbH & Co. KG |
| ANTILUX^{®} 654 | Wachs | Lanxess Deutschland GmbH |
| RHENOGRAN^{®} CBS-80 | Vulkanisationsbeschleuniger, N-Cyclohexyl-2-benzothiazol-sulfenamid (Polymer gebunden; 80% CBS enthaltend) | Lanxess Deutschland GmbH |
| ZINKOXID WS | Zinkoxid Weißsiegel | Grillo Zinkoxid GmbH |
| SCHWEFEL | Schwefel gemahlen | Kandelium Group GmbH |
| VULKANOX^{®} 4020/LG | Alterungsschutzmittel, N-1,3-Dimethyl-butyl-*N*'-phenyl-*p*-phenylendiamin (6PPD) | Lanxess Deutschland GmbH |
| Zeosil^{®} 1165MP | Kieselsäure | Zeon Europe GmbH |
| VULKANOX^{®} HS/LG | Alterungsschutzmittel, 2,2,4-trimethyl-1,2-dihydroquinoline, polymerisiert (TMQ) | Lanxess Deutschland GmbH |
| SI75^{®} | Silan, Bis-(triethoxysilylpropyl)-tetrasulfan | Evonik Resource Efficiency GmbH |
| RHENOGRAN^{®} DPG-80 | Vulkanisationsbeschleuniger, *N*,*N*'-Diphenylguanidin (Polymer gebunden; 80% DPG enthaltend) | Lanxess Deutschland GmbH |
| Escorez^{®} 5600 | Aromatisch modifizierter, cycloaliphatischer Kohlenwasserstoffharz | ExxonMobil |
| Neol^{®} Neopentylglycol flakes (NPG) | 2,2-Dimethyl-1,3-propanediol, CAS-Nr: 126-30-7 | BASF SE |
| Hydroxypivalic acid neopentylglycolester molten (HPN) | 2,2-Dimethyl-1,3-propandiol-mono(hydroxypivalat), CAS-Nr: 1115-20-4 | BASF SE |
| Trimethylolpropane | 1,1,1-Trimethylolpropan (2-Ethyl-2-(hydroxymethyl)-1,3-propandiol, TMP, CAS-Nr. 77-99-6 | Lanxess Deutschland GmbH |

TMP/Fettsäure: Mischung aus 70 Gew.-% Stearinsäure, 25 Gew.-% TMP, 5 Gew.-% Polyethylenglykol, bezogen auf das Gesamtgewicht der Mischung; NPG/Fettsäure: Mischung aus 70 Gew.-% Stearinsäure, 25 Gew.-% NPG, 5 Gew.-% Polyethylenglykol, bezogen auf das Gesamtgewicht der Mischung; HPN/Fettsäure: Mischung aus 70 Gew.-% Stearinsäure, 25 Gew.-% HPN, 5 Gew.-% Polyethylenglykol, bezogen auf das Gesamtgewicht der Mischung.

### Herstellung der Kautschukvulkanisate

Es wurden die Kautschukmischungen erfindungsgemäßen Kautschukmischung (Beispiele 1 und 2) sowie der nicht erfindungsgemäßen Referenzmischung (Beispiel 3) gemäß den in Tabelle 2 angegeben Rezepturen hergestellt. Beispiel 3 wurde in Anlehnung an WO2010136345A1 erstellt.

Alle Kautschukmischungen der Beispiele enthalten identische Mengen der Einsatzstoffe und unterscheiden sich nur in der Anwesenheit von TMP, NPG und HPN.

Die Herstellung der Kautschukmischungen erfolgte in folgenden Schritten:

### 1. Mischstufe:

▪ NIPOL^{®} BR1261 und SPRINTAN^{®} SLR 3402 werden in einem Innenmischer vorgelegt und ca. 30 Sekunden gemischt.
▪ Zugabe Hälfte Zeosil^{®}1165MP und SI^{®} 75 mischen für ca. 60 Sekunden.
▪ Zugabe Hälfte Zeosil^{®}1165MP, CORAX^{®}N 234, sowie Stearinsäure, Vulkanox^{®} 4020, Vulkanox^{®} HS, Antilux^{®} 654, Vivatec 500, Escorez^{®} 5600, RHENOGRAN^{®} DPG-80 und der jeweiligen Polyol/Fettsäure-Mischung, mischen ca. 60 Sekunden, dann kehren. Mischen bis eine Temperatur von 160 °C erreicht ist, danach 4 min mischen bei 160 °C.

Nach Abschluss der ersten Mischstufe wird das Mischstück von einem nachgeschalteten Walzwerk aufgenommen und zu einer Platte, einem Streifen oder Pellets ausgeformt und für 24 Stunden bei Raumtemperatur gelagert. Verarbeitungstemperaturen liegen hierbei bei 70°C.

### 2. Mischstufe:

Danach erfolgte ein Mischen in einem Innenmischer bis eine Temperatur von 160°C erreicht ist (das sogenannte Nachzwicken).

Nach Abschluss der zweiten Mischstufe wird das Mischstück von einem nachgeschalteten Walzwerk aufgenommen und zu einer Platte, einem Streifen oder Pellets ausgeformt und für 24 Stunden bei Raumtemperatur gelagert.

### 3. Mischstufe:

Die Zugabe von Schwefel, Zinkoxid und des Vulkanisationsbeschleunigers Rhenogran^{®} CBS-80 erfolgte im Innenmischer für 2 min bei 100 °C.

Nach Abschluss der dritten Mischstufe wird das Mischstück mit einem Walzwerk zu einer Platte, einem Streifen oder Pellets ausgeformt und für 24 Stunden bei Raumtemperatur gelagert. Verarbeitungstemperaturen liegen hierbei bei 70°C.

**Tabelle 2: Bestandteile der erfindungsgemäßen Kautschukmischungen und der Referenzmischung**

| Beispiel | **1 (erf.)** | **2 (erf.)** | **3 (Vgl.)** |
|---|---|---|---|
| Nipol^{®} BR 1261 | 40 | 40 | 40 |
| Sprintan^{®} SLR 3402-Schkopau | 60 | 60 | 60 |
| CORAX^{®} N 234 | 5 | 5 | 5 |
| Zeosil^{®}1165MP | 120 | 120 | 120 |
| VivaTec 500 | 20 | 20 | 20 |
| Escorez^{®} 5600 | 30 | 30 | 30 |
| Antilux^{®} 654 | 2 | 2 | 2 |
| VULKANOX^{®} 4020/LG | 2 | 2 | 2 |
| VULKANOX^{®} HS/LG | 2 | 2 | 2 |
| Si75^{®} | 8,5 | 8,5 | 8,5 |
| Stearinsäure | 2 | 2 | 2 |
| Zinkoxid WS | 2,5 | 2,5 | 2,5 |
| Rhenogran^{®} CBS-80 | 2 | 2 | 2 |
| Rhenogran^{®} DPG-80 | 2,5 | 2,5 | 2,5 |
| Schwefel | 2 | 2 | 2 |
| NPG/Fettsäure | 5 | | |
| HPN/Fettsäure | | 5 | |
| TMP/Fettsäure | | | 5 |

| | | | |
|---|---|---|---|
| Mengenangaben in phr (Gewichtsteile pro 100 Teile Kautschuk) | | | |

### Technische Prüfung

Die bei 160°C aus den Kautschukmischungen der Beispiele 1-3 hergestellten Vulkanisate wurden den unten angegebenen technischen Prüfungen unterzogen. Die ermittelten Werte sind der Tabelle 3 zu entnehmen.

Für die Tests an den Kautschukmischungen und den Prüfkörpern wurden folgende Verfahren angewandt:

### Mooney-Viskositätsmessung

Die Bestimmung erfolgte mittels Scherscheibenviskosimeter gemäß ASTM D 1646. Die Viskosität lässt sich aus der Kraft, die Kautschuke und Kautschukmischungen ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird. Die Viskosität wird zusammen mit den jeweiligen Prüfbedingungen angegeben, beispielsweise ML (1+4) 100°C (Mooney Viskosität, Rotorgröße L, Vorwärmzeit und Prüfzeit in Minuten, Prüftemperatur).

### Mooney-Scorch Messung

Der Mooney-Scorch Versuch ist ein standardisierter Versuch, um das Verhalten der An-Vulkanisation einer Gummiprobe bei erhöhter Temperatur zu charakterisieren. Dabei wird die Zeit bestimmt, nach der die Viskosität um einen festgelegten Wert, hier um 5 bzw. 10 Mooney-Einheiten (Ts05 bzw. Ts10), ansteigt. Die Bestimmung erfolgte mittels Scherscheibenviskosimeter gemäß ASTM D 1646 bei 130°C.

### Verwendetes Rheometer (Vulkameter) und An-/ Ausvulkanisationszeit

Der Vulkanisationsverlauf am MDR (moving die rheometer) und dessen analytischen Daten wurden an einem Monsanto-Rheometer MDR 2000 nach ASTM D5289-95 gemessen. Bei 160°C betrug die Vulkanisationszeit 15 min.

Der Wert von Delta S' berechnet sich aus der Differenz zwischen dem höchsten und dem niedrigsten Wert der Rheometerkurve, demnach Sₘₐₓ - Sₘᵢₙ.

### Bestimmung Bruchdehnung, Zugfestigkeit, Modul 50, 100, 300

Diese Messungen erfolgten nach DIN 53504 (Zugversuch, Stab S2, 5-fach Messung).

### Bestimmung der Shore-A-Härte

Messung der Shore Härte (Shore A) erfolgte nach DIN 53505 bei 23 °C (3-fach Messung).

### Rückprallelastizität

Messung der Rückprallelastizität erfolgte bei 23 °C (3-fach Messung) nach DIN 53512.

### Bestimmung des Verlustfaktors

Der Verlustfaktor tan δ wurde bei 0°C und 60°C und einer Messfrequenz von 10 Hz gemäß dynamischer Dämpfung DIN 53513 bestimmt.

### Bestimmung des Payne Effektes

Amplitudensweep (Amplitude der Deformation wird variiert) von 0,5% bis 15% bei 60 °C und 10 Hz. Der Payne Effekt (delta G') ist die Differenz zwischen G' bei 0,5% Amplitude und G' bei 15% Amplitude.

**Tabelle 3: Ergebnisse der technischen Prüfungen**

| Beispiel | **1(erf.)** | **2(erf.)** | **3 (Vgl.)** |
|---|---|---|---|
| Mooney-Viskosität, ML1+4 | | | |
| 1. Mischstufe | 117,9 | 120,89 | 121,81 |
| 2. Mischstufe | 111,02 | 109,3 | 113,76 |
| 3. Mischstufe | 95,88 | 95,05 | 99,06 |

| Mooney Scorch, 130°C | | | |
|---|---|---|---|
| Ts05 [s] | 1348 | 1351 | 1249 |
| Ts10 [s] | 1544 | 1571 | 1436 |

| MDR, 160°C | | | |
|---|---|---|---|
| Sₘₐₓ - Sₘᵢₙ [dNm] | 15,01 | 14,92 | 15,61 |
| Zugversuch | | | |
| Modul 50 [Mpa] | 1,28 | 1,25 | 1,41 |
| Modul 100 [Mpa] | 2,12 | 2,04 | 2,36 |
| Modul 300 [Mpa] | 9,08 | 8,88 | 9,83 |
| Bruchdehnung [%] | 520 | 536 | 503 |
| Zugfestigkeit [Mpa] | 21,33 | 21,9 | 21,62 |
| Rückprallelastizität [%] 23°C | 32 | 33 | 32 |
| Härte [ShoreA] | 66 | 64 | 66 |

| MTS Amplitudenversuch | | | |
|---|---|---|---|
| delta G' [Mpa] | 1,94 | 2,11 | 2,4 |
| Eplexor | | | |
| tan d bei 0°C | 0,255 | 0,258 | 0,262 |
| tan d bei 60°C | 0,133 | 0,136 | 0,132 |

### Fazit

Verwendet man in den erfindungsgemäßen Kautschukmischungen anstelle TMP/Fettsäure die erfindungsgemäßen Mischungen NPG/Fettsäure (Beispiel 1) bzw. HPN/Fettsäure (Beispiel 2), so erzielt man in allen drei Mischstufen niedrigere Mooney Viskositäten und damit leichter zu verarbeitende Mischungen als in der analogen Kautschukmischung enthaltend TMP (Beispiel 3, Vergleich). Gleichzeitig wird der polare Füllstoff Silika in beiden erfindungsgemäßen Mischungen besser dispergiert, wie anhand des erniedrigten Payne-Effektes (delta G') der Beispiele 1 und 2 zu erkennen ist. Auch steigt die Anvulkanisationssicherheit bei der Verwendung der erfindungsgemäßen Mischungen an, was an den verlängerten Ts05 und Ts10 zu erkennen ist, wodurch sich das zeitliche Fenster für eine sichere Verarbeitung vergrößert.

Die anderen anwendungsrelevanten Eigenschaften bleiben gleich oder verbessern sich sogar leicht.

## Patentansprüche

1. Kautschukmischungen enthaltend
- mindestens einen Kautschuk,
- mindestens einen hydroxylgruppenhaltigen oxidischen Füllstoff,
- mindestens ein Verstärkungsadditiv aus der Reihe der schwefelhaltigen organischen Silane,
- mindestens einen Vernetzer aus der Reihe Schwefel und Schwefelspender, und
- mindestens eine Fettsäure
wobei weiter mindestens eine nichtaromatische, polare Substanz mit 4-12 Kohlenstoffatomen, bevorzugt mit 5-10 Kohlenstoffatomen, enthalten ist, die:
- Kohlenstoff-, Wasserstoff- und Sauerstoffatome enthält,
- einen Bereich von mindestens zwei chemisch verbundenen Kohlenstoffatomen aufweist,
- eine Hydroxylgruppe und zumindest eine weitere Sauerstoff enthaltende Gruppe ausgewählt aus Hydroxyl-, Ester-, Ether-, Acetal-, Ketal-, Aldehyd- und Carbonsäuregruppen enthält, wobei die Hydroxylgruppe und die weitere Sauerstoff enthaltende Gruppe nicht mehr als 3 Positionen entlang einer Molekülkette voneinander entfernt sind, und
- verschieden ist von 1,1,1-Trimethylolpropan (TMP).

2. Kautschukmischung nach Anspruch 1, **dadurch gekennzeichnet, dass** der mindestens eine Kautschuk ausgewählt ist aus der Gruppe bestehend aus Naturkautschuk und Synthesekautschuken, bevorzugt mindestens ein funktionalisierter Synthesekautschuk ist, besonders bevorzugt mindestens ein funktionalisierter Synthesekautschuk ausgewählt aus der Gruppe bestehend aus funktionalisiertem SBR-, funktionalisiertem BR- und funktionalisiertem IR-Kautschuk, ganz besonders bevorzugt aus funktionalisiertem SBR- und funktionalisiertem BR-Kautschuk.

3. Kautschukmischung gemäß einem der Ansprüche 1 oder 2, **dadurch gekennzeichnet, dass** der mindestens eine hydroxylgruppenhaltige oxidische Füllstoff ausgewählt ist aus der Gruppe bestehend aus Kieselsäuren, synthetischen Silikaten und natürlichen Silikaten, und in einer Menge von 0,1 bis 250 phr, bevorzugt 20 bis 200 phr, besonders bevorzugt von 50 bis 180 phr, ganz besonders bevorzugt 110 - 160 phr in der Kautschukmischung enthalten ist.

4. Kautschukmischung gemäß einem der Ansprüche 1-3, **dadurch gekennzeichnet, dass** die mindestens eine nichtaromatische, polare Substanz mit 4-12 Kohlenstoffatomen eine Hydroxylgruppe und mindestens eine weitere Sauerstoff enthaltende Gruppe ausgewählt aus Hydroxyl-, Ester- und Ether-Gruppen enthält, bevorzugt ausgewählt aus Hydroxyl- und Ester-Gruppen, wobei die Hydroxylgruppe und die weitere Sauerstoff enthaltende Gruppe nicht mehr als 3 Positionen entlang einer Molekülkette voneinander entfernt sind, besonders bevorzugt eine Hydroxylgruppe und mindestens eine weitere Hydroxyl-Gruppe und ggf. eine Ester-Gruppe.

5. Kautschukmischung gemäß einem der Ansprüche 1-4, **dadurch gekennzeichnet, dass** die mindestens eine nichtaromatische, polare Substanz mit 4-12 Kohlenstoffatomen ausgewählt ist aus der Gruppe bestehend aus Diethylenglykol, Dipropylenglykol, 2-sec-Butyl-2-methyl-1,3-propandiol, 2,2'-Oxydi-1-propanol, 1,1'-Oxydi-2-propanol, 2-(2-Hydroxypropoxy)-1-propanol, 2-Methyl-1,3-propandiol, 2,2,4-Trimethyl-1,3-pentandiol, 2-Ethyl-1,3-hexandiol, Trimethylolethan, Ditrimethylolpropan, 2,2,2',2',-Tetrakis(hydroxymethyl)-3,3'-oxydipropan-1-ol (Dipentaerythrit), 2,2-Dimethylpropan-1,3-diol (CAS-Nr. 126-30-7) und Hydroxypivalinsäureneopentylglycolester (2,2-Dimethyl-1,3-propandiol-mono-(hydroxy-pivalat), CAS-Nr: 1115-20-4), besonders bevorzugt ausgewählt aus Dipropylenglykol, 2-sec-Butyl-2-methyl-1,3-propandiol, 2,2,2',2',-Tetrakis(hydroxymethyl)-3,3'-oxydipropan-1-ol (Dipenta-erythrit), 2,2-Dimethylpropan-1,3-diol (CAS-Nr. 126-30-7) und Hydroxypivalinsäure-neopentylglycolester (2,2-Dimethyl-1,3-propandiol-mono-(hydroxy-pivalat), CAS-Nr: 1115-20-4), meist bevorzugt ausgewählt aus 2,2-Dimethylpropan-1,3-diol (CAS-Nr. 126-30-7) und Hydroxypivalinsäureneopentylglycolester (2,2-Dimethyl-1,3-propandiol-mono-(hydroxypivalat), CAS-Nr: 1115-20-4).

6. Kautschukmischung gemäß einem der Ansprüche 1-5, **dadurch gekennzeichnet, dass** die mindestens eine nichtaromatische, polare Substanz mit 4-12 Kohlenstoffatomen in einer Menge von 0,1 - 10 phr in der Kautschukmischung enthalten ist, bevorzugt von 0,2 - 8 phr, besonders bevorzugt von 0,3 - 5 phr, ganz besonders bevorzugt von 0,4 - 2 phr.

7. Kautschukmischung gemäß einem der Ansprüche 1-6, **dadurch gekennzeichnet, dass** die mindestens eine Fettsäure ausgewählt ist aus gesättigten und ungesättigten aliphatischen geradkettigen, verzweigten oder cyclischen Carbonsäuren mit einer Kohlenstoffanzahl von 6 bis 22, bevorzugt 8 bis 20, sowie Mischungen davon, bevorzugt ausgewählt aus Palmitinsäure und Stearinsäure, oder Mischungen davon, besonders bevorzugt Stearinsäure.

8. Kautschukmischung gemäß einem der Ansprüche 1-7, **dadurch gekennzeichnet, dass** die mindestens eine Fettsäure in einer Menge von 0,3 -15 phr enthalten ist, bevorzugt von 0,5 - 10 phr, besonders bevorzugt von 0,9 - 10 phr, ganz besonders bevorzugt von 1,2 - 8 phr.

9. Kautschukmischung gemäß einem der Ansprüche 1-8, **dadurch gekennzeichnet, dass** sie
- 50 bis 100 phr mindestens eines funktionalisierten Synthesekautschuks, bevorzugt 70 - 100 phr, bevorzugt eines funktionalisierten BR-Kautschuks und/oder funktionalisierten SBR-Kautschuks,
- 0 bis 50 phr mindestens eines Naturkautschuks und/ oder unfunktionalisierten Synthesekautschuks, bevorzugt 0 bis 30 phr,
- 20 bis 200 phr mindestens eines hydroxylgruppenhaltigen oxidischen Füllstoffs,
- 0,5 bis 15 phr mindestens eines Verstärkungsadditives aus der Gruppe der schwefelhaltigen organischen Silane, bevorzugt bifunktionelle schwefelhaltige organische Silane, die am Siliciumatom mindestens eine Alkoxy-, Cycloalkoxy-, oder Phenoxygruppe aufweisen und als andere Funktionalität eine Gruppe ausgewählt aus -SCN, -SH oder -Sx- mit x = 2 bis 8, besonders bevorzugt Alkoxysilylgruppen-haltige schwefelhaltige Silane und ganz besonders bevorzugt Trialkoxysilylgruppen-haltige schwefelhaltige organische Silane,
- 0,1 bis 120 phr mindestens eines Ruß, bevorzugt 0,1 bis 100 phr,
- 0,5 bis 10 phr mindestens eines Vernetzers aus der Reihe Schwefelspender und Schwefel,
- 0,1 bis 10 phr Zinkoxid,
- 0,1 bis 10 phr mindestens eines Vulkanisationsbeschleunigers,
- 0,3 bis 15 phr der mindestens eine Fettsäure, bevorzugt von 0,5 - 10 phr, besonders bevorzugt von 0,9 - 10 phr, ganz besonders bevorzugt von 1,2 - 8 phr, und
- 0,1 bis 10 phr der mindestens einen nichtaromatischen, polaren Substanz mit 4-12 Kohlenstoffatomen, bevorzugt mit 5-10 Kohlenstoffatomen, bevorzugt 0,2
- 8 phr, besonders bevorzugt 0,3 - 5 phr, ganz besonders bevorzugt 0,4 - 2 phr, enthält.

10. Mischung A, enthaltend mindestens eine nichtaromatische, polare Substanz mit 4-12 Kohlenstoffatomen, bevorzugt mit 5-10 Kohlenstoffatomen, die:
- Kohlenstoff-, Wasserstoff- und Sauerstoffatome enthält,
- einen Bereich von mindestens zwei chemisch verbundenen Kohlenstoffatomen aufweist,
- eine Hydroxylgruppe und zumindest eine weitere Sauerstoff enthaltende Gruppe ausgewählt aus Hydroxyl-, Ester-, Ether-, Acetal-, Ketal-, Aldehyd- und Carbonsäuregruppen enthält, wobei die Hydroxylgruppe und die weitere Sauerstoff enthaltende Gruppe nicht mehr als 3 Positionen entlang einer Molekülkette voneinander entfernt sind, und
- verschieden ist von 1,1,1-Trimethylolpropan (TMP),
zu 10 - 40 Gew.-%, bevorzugt zu 20 - 35 Gew.-%, und mindestens eine Fettsäure zu 60 - 90 Gew.-%, bevorzugt zu 65 - 80 Gew.-%, bezogen auf die Gesamtmenge von Mischung A.

11. Verfahren zur Herstellung der erfindungsgemäßen Kautschukmischungen nach einem der Ansprüche 1-9 oder zur Herstellung der Mischung A nach Anspruch 10, **dadurch gekennzeichnet, dass** in einem Mischprozess die jeweiligen Komponenten gemischt werden.

12. Vulkanisate, erhältlich durch Vulkanisation von Kautschukmischungen gemäß einem der Ansprüche 1 bis 9.

13. Formkörper, bevorzugt technische Gummiartikel und Reifen, enthaltend ein oder mehrere Kautschukvulkanisate gemäß Anspruch 12.

14. Verwendung einer mindestens einen nichtaromatischen, polaren Substanz mit 4-12 Kohlenstoffatomen, bevorzugt mit 5-10 Kohlenstoffatomen, die:
- Kohlenstoff-, Wasserstoff- und Sauerstoffatome enthält,
- einen Bereich von mindestens zwei chemisch verbundenen Kohlenstoffatomen aufweist,
- eine Hydroxylgruppe und zumindest eine weitere Sauerstoff enthaltende Gruppe ausgewählt aus Hydroxyl-, Ester-, Ether-, Acetal-, Ketal-, Aldehyd- und Carbonsäuregruppen enthält, wobei die Hydroxylgruppe und die weitere Sauerstoff enthaltende Gruppe nicht mehr als 3 Positionen entlang einer Molekülkette voneinander entfernt sind, und
- verschieden ist von 1,1,1-Trimethylolpropan (TMP),
in einer Menge von 0,1 - 10 phr, bevorzugt 0,2 - 8 phr, besonders bevorzugt 0,3 - 5 phr, ganz besonders bevorzugt 0,4 - 2 phr, in schwefelvernetzbaren Kautschukmischungen zur Verbesserung der Verarbeitbarkeit der Kautschukmischungen und zur Verbesserung der Füllstoffdispersion in den Kautschukmischungen.

15. Verwendung der Mischung A gemäß Anspruch 10, bevorzugt in einer Menge von 1 - 10 phr, besonders bevorzugt von 2 - 8 phr, ganz besonders bevorzugt von 2,5 - 6 phr, in schwefelvernetzbaren Kautschukmischungen zur Verbesserung der Verarbeitbarkeit der Kautschukmischungen und zur Verbesserung der Füllstoffdispersion in den Kautschukmischungen.
